(19) **Europäisches Patentamt / European Patent Office / Office européen des brevets**

(11) **EP 4 409 450 B1**

(12) **FASCICULE DE BREVET EUROPEEN**

(45) Date de publication et mention de la délivrance du brevet:
**25.06.2025 Bulletin 2025/26**

(21) Numéro de dépôt: **22797410.2**

(22) Date de dépôt: **28.09.2022**

(51) Classification Internationale des Brevets (IPC):
**G06F 21/57** *(2013.01)* **H04L 9/40** *(2022.01)*

(52) Classification Coopérative des Brevets (CPC):
**H04L 63/1425; G06F 21/577**

(86) Numéro de dépôt international:
**PCT/FR2022/051835**

(87) Numéro de publication internationale:
**WO 2023/052728 (06.04.2023 Gazette 2023/14)**

(54) **PROCÉDÉ D'ANALYSE DE LA VULNÉRABILITÉ D'UN SYSTÈME D'INFORMATION À UNE ATTAQUE INFORMATIQUE**

VERFAHREN ZUR ANALYSE DER SCHWACHSTELLEN EINES INFORMATIONSSYSTEMS GEGENÜBER EINEM CYBERANGRIFF

METHOD FOR ANALYZING THE VULNERABILITY OF AN INFORMATION SYSTEM TO A CYBER ATTACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2021 FR 2110359**

(43) Date de publication de la demande:
**07.08.2024 Bulletin 2024/32**

(73) Titulaire: **Citalid Cybersecurite**
**75017 Paris (FR)**

(72) Inventeurs:
• **CARTAN, Maxime**
**92300 Levallois-Perret (FR)**
• **HAMON, Olivier**
**92110 Clichy (FR)**
• **LE BRETON, Nicolas**
**75017 Paris (FR)**

(74) Mandataire: **Regimbeau**
**20, rue de Chazelles**
**75847 Paris Cedex 17 (FR)**

(56) Documents cités:
**EP-A1- 3 664 409 US-A1- 2020 358 807**
**US-B1- 7 926 113**

**Description**

**DOMAINE TECHNIQUE**

Le domaine de l'invention est celui de la cybersécurité et plus particulièrement celui de l'analyse de la vulnérabilité d'un système d'information à une attaque informatique.

**TECHNIQUE ANTÉRIEURE**

Dans le cadre de l'analyse des risques liés aux menaces cyber, on cherche à évaluer la probabilité qu'un acteur malveillant réussisse une attaque informatique contre une organisation donnée. Pour ce faire, l'approche classique consiste à effectuer un test d'intrusion (« pentest ») sur le système d'information (SI) de l'organisation, et plus particulièrement un test dit de Red Team, à savoir un test d'intrusion en conditions réelles simulant un mode opératoire d'attaque (dit « MOA » dans ce qui suit).

Si cette approche permet d'obtenir des résultats précis et confrontés à la réalité de la défense mise en place par l'organisation, elle présente toutefois des caractéristiques la rendant insuffisante.

Tout d'abord, cette approche ne passe pas à l'échelle. En effet, si un exercice de Red Team peut s'effectuer sur une partie du SI en simulant un mode opératoire spécifique, il est inenvisageable de tester l'ensemble des modes opératoires existants contre l'intégralité du SI d'un grand groupe.

Ensuite, elle est fixe dans le temps. En effet, si un exercice de Red Team procure une photographie à un instant donné de l'état de la défense d'un SI face à un mode opératoire particulier, toute évolution du mode opératoire ou de la structure du SI requiert une mise à jour et donc la réalisation d'un nouveau test d'intrusion.

Par ailleurs, cette approche dépend de l'auditeur qui réalise le test d'intrusion et non de l'attaquant. Or chaque auditeur dispose d'outils, de ressources, d'une expérience et de connaissances en cybersécurité qui lui sont propres, ce qui introduit un biais dans le test d'intrusion et rend complexe une harmonisation des résultats au niveau d'une organisation.

Enfin, si un test d'intrusion permet de générer des recommandations de sécurité, il ne permet pas d'évaluer l'efficacité projetée de celles-ci. Ainsi, si l'on souhaite connaître le retour sur investissement potentiel d'une action de sécurisation, il est nécessaire de la déployer puis d'effectuer un nouveau test d'intrusion en guise de comparaison avec l'ancien.

US 7,926,113 B1 décrit des systèmes et méthodes permettant de gérer plusieurs scanners de vulnérabilité répartis sur un ou plusieurs réseaux. En répartissant plusieurs scanners sur un réseau, la charge de travail de chaque scanner peut être réduite. En outre, les scanners peuvent être placés directement derrière les pares-feux pour une analyse plus approfondie. En outre, les scanners peuvent être placés plus près des réseaux analysés. En plaçant les scanners de vulnérabilité plus près, le trafic de balayage réel ne traverse pas la structure de commutation et de routage du réseau central, ce qui évite les pannes de réseau potentielles dues à l'activité de balayage. En outre, la distance plus courte entre les scanners et les cibles analysées accélère les temps d'analyse en réduisant la distance que les paquets doivent parcourir.

**EXPOSÉ DE L'INVENTION**

L'invention a pour objectif de proposer un outil d'analyse des risques liés aux menaces cyber qui passe outre ces inconvénients. A cet effet, l'invention propose une méthode permettant d'estimer la probabilité de réussite d'une attaque informatique sans avoir à réaliser le test d'intrusion, méthode qui exploite le niveau de sophistication des MOA ciblant une organisation et le niveau de sophistication des procédures de sécurité déployées par l'organisation tant en termes de procédures de défense passive qu'en termes de procédures de défense active.

L'invention propose plus particulièrement un procédé mis en œuvre par ordinateur d'analyse de la vulnérabilité d'un système d'information à une attaque informatique menée par un attaquant, l'attaque informatique se propageant sur un ou plusieurs chemins de compromission chacun constitué d'une succession d'au moins un bien informatique incluant un bien informatique d'entrée. Ce procédé comprend pour chacun du ou des chemins de compromission :

- la réalisation d'une pluralité de simulations de propagation de l'attaque informatique sur le chemin de compromission, où chaque simulation comprend pour chacun des biens informatiques du chemin de compromission les étapes consistant à :

  ○ déterminer un premier score défensif (SDP) représentatif d'une capacité d'une procédure de cybersécurité assurant une défense passive du bien informatique à bloquer l'attaque informatique, en réalisant au moins un tirage aléatoire avec une probabilité de sélection qui dépend d'une sophistication de la procédure de cybersécurité assurant la défense passive et d'une incertitude sur ladite sophistication ;

  ○ déterminer un premier score offensif (SOP) représentatif d'une capacité de l'attaque informatique à compromettre la procédure de cybersécurité assurant la défense passive du bien informatique, en réalisant au moins un tirage aléatoire avec une probabilité de sélection qui dépend d'une sophistication de l'attaque informatique à compromettre la procédure de cybersécurité assurant la défense passive et d'une incertitude sur ladite sophistication ;

○ déterminer un deuxième score défensif (SDR) représentatif d'une capacité d'une procédure de cybersécurité assurant une défense active du bien informatique à bloquer l'attaque informatique, en réalisant au moins un tirage aléatoire avec une probabilité de sélection qui dépend d'une sophistication de la procédure de cybersécurité assurant la défense active et d'une incertitude sur ladite sophistication ;

○ déterminer un deuxième score offensif (SOR) représentatif d'une capacité de l'attaque informatique à compromettre la procédure de cybersécurité assurant la défense active du bien informatique, en réalisant au moins un tirage aléatoire avec une probabilité de sélection qui dépend d'une sophistication de l'attaque informatique à compromettre la procédure de cybersécurité assurant la défense active et d'une incertitude sur ladite sophistication ;

○ déterminer une mise en échec (ECH) du bien informatique en comparant le premier score offensif avec le premier score défensif et en comparant le deuxième score offensif avec le deuxième score défensif;

○ déterminer une compromission du bien informatique en cas de mise en échec déterminée dudit bien et de chacun du ou des biens informatiques en amont dudit bien dans le chemin de compromission lorsque ledit bien n'est pas le bien informatique d'entrée ;

• la détermination d'un indicateur de vulnérabilité d'un bien informatique du chemin de compromission sur la base du nombre de simulations pour lesquelles une compromission dudit bien a été déterminée.

Ce procédé permet d'une part de passer à l'échelle le principe du test d'intrusion, puisque les simulations peuvent être menées à bien en temps raisonnable et avec des résultats harmonisés sur l'ensemble des SI d'une organisation et pour l'ensemble des MOA connus. D'autre part, ce procédé assure un caractère évolutif puisque les résultats peuvent être maintenus à jour au cours du temps, en fonction de l'évolution de l'intérêt des MOA envers l'organisation, de leur sophistication et de leurs répertoires de procédures d'attaque ainsi qu'en fonction de l'évolution des procédures de sécurité déployées par l'organisation.

Certains aspects préférés mais non limitatifs de ce procédé sont les suivants :

- l'attaque informatique menée par l'attaquant sur un bien informatique comprend une ou plusieurs procédures d'attaque visant à compromettre la procédure de cybersécurité assurant la défense passive ou la procédure de cybersécurité assurant la défense active ;
- l'au moins un tirage aléatoire avec une probabilité de sélection qui dépend d'une sophistication de l'attaque informatique à compromettre la procédure de cybersécurité assurant la défense passive, respectivement la défense active, et d'une incertitude sur ladite sophistication comprend, pour chacun des biens informatiques du chemin de compromission et pour chacune des procédures d'attaque visant à compromettre la procédure de cybersécurité assurant la défense passive, respectivement la défense active, le tirage aléatoire d'un premier, respectivement deuxième, indicateur d'offensivité avec une probabilité de sélection qui dépend d'une sophistication de la procédure d'attaque et d'une incertitude sur ladite sophistication ; et le premier, respectivement deuxième, score offensif est déterminé à partir des premiers, respectivement deuxièmes, indicateurs d'offensivité tirés pour chacune des procédures d'attaque visant à compromettre la procédure de cybersécurité assurant la défense active, respectivement la défense passive ;

- la procédure de cybersécurité assurant la défense passive, respectivement la défense active, activée au niveau d'un bien informatique comprend une ou plusieurs mesures de sécurité qui assurent une fonction de cybersécurité du type défense passive, respectivement du type une défense active, contre les procédures d'attaque visant à compromettre la procédure de cybersécurité assurant la défense passive, respectivement la défense active;
- l'au moins un tirage aléatoire avec une probabilité de sélection qui dépend d'une sophistication de la procédure de cybersécurité assurant la défense passive, respectivement la défense active, et d'une incertitude sur ladite sophistication comprend, pour chacun des biens informatiques du chemin de compromission et pour chacune des mesures de sécurité qui assurent une fonction de cybersécurité du type défense passive, respectivement du type défense active, le tirage aléatoire d'un premier, respectivement deuxième, indicateur de défense avec une probabilité de sélection qui dépend d'une sophistication de la mesure de sécurité et d'une incertitude sur ladite sophistication ; et le premier, respectivement deuxième, score défensif est déterminé à partir des premiers, respectivement deuxièmes, indicateurs de défense, tirés pour chacune desdites mesures de sécurité qui assurent une fonction de cybersécurité du type défense passive, respectivement du type défense active ;
- il comprend en outre la détermination pseudo-aléatoire d'une capacité d'une procédure de cybersécurité du type détection activée au niveau du bien informatique à détecter l'attaque informatique, d'une capacité d'une procédure de cybersécurité du type réponse activée au niveau du bien informatique à bloquer l'attaque informatique, d'une capacité de l'attaque informatique à compromettre la procédure de cybersécurité du type détection, et d'une capacité de l'attaque informatique à compromettre la procédure de cybersécurité du type réponse ;

- une absence de mise en échec d'un bien informatique est déterminée :

    • lorsque le premier score défensif est supérieur au premier score offensif, ou
    • dans le cas contraire, à la fois lorsque la capacité de la procédure de cybersécurité du type détection à détecter l'attaque informatique est supérieure à la capacité de l'attaque informatique à compromettre la procédure de cybersécurité du type détection et lorsque la capacité de la procédure de cybersécurité du type réponse à bloquer l'attaque informatique est supérieure à la capacité de l'attaque informatique à compromettre la procédure de cybersécurité du type réponse ;

- chacun du premier et du deuxième score défensif est augmenté d'un bonus basé sur une capacité d'une procédure de cybersécurité du type identification activée au niveau du bien informatique ;
- il comprend en outre, dans une simulation de propagation de l'attaque informatique sur un chemin de compromission, la constatation que l'attaque est bloquée en cas de non-détermination d'une mise en échec pour au moins un des biens informatiques du chemin de compromission ;
- il comprend en outre la détermination que l'attaque est bloquée par la procédure de cybersécurité assurant la défense passive ou par la procédure de cybersécurité assurant la défense active d'un bien informatique déterminé comme n'étant pas mis en échec ;
- il comprend en outre la détermination d'un niveau de profondeur de l'attaque informatique bloquée sur un chemin de compromission comme étant le bien informatique précédant le premier bien informatique du chemin de compromission pour lequel un échec n'est pas déterminé ;
- chaque simulation comprend en outre une étape consistant, pour chacun des biens du chemin de compromission, à déterminer pseudo-aléatoirement une capacité d'une procédure de cybersécurité du type remédiation activée au niveau du bien informatique à remédier à l'attaque informatique et une étape consistant à calculer un impact de l'attaque au cours de laquelle un impact associé à un bien pour lequel une compromission est déterminée est réduit au moyen de la capacité de la procédure de cybersécurité du type remédiation activée au niveau dudit bien ;
- il comprend en outre la réitération des étapes de réalisation d'une pluralité de simulations et de détermination d'un indicateur de compromission après modification d'une procédure de cybersécurité au niveau d'un des biens informatiques du chemin de compromission et l'évaluation de l'impact de ladite modification par comparaison des indicateurs de compromission déterminés par la première itération desdites étapes et par ladite réitération desdites étapes ;
- il comprend en outre la réitération des étapes de réalisation d'une pluralité de simulations et de détermination d'un indicateur de compromission pour un autre chemin de compromission incluant le bien cible.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

La figure 1 est un schéma illustrant différentes étapes mises en œuvre au cours d'une simulation pour déterminer si un bien informatique est compromis par l'attaque informatique ;
La figure 2 est un schéma illustrant un exemple de propagation d'une attaque informatique le long d'un chemin de compromission telle que déterminée au cours d'une simulation ;
La figure 3 est un schéma illustrant une réalisation possible d'une comparaison de scores offensifs et de scores défensifs pour déterminer une compromission d'un bien informatique au cours d'une simulation.

## EXPOSÉ DÉTAILLÉ DE MODES DE RÉALISATION PARTICULIERS

L'invention porte sur un procédé mis en œuvre par ordinateur d'analyse de la vulnérabilité d'un système d'information à une attaque informatique menée par un attaquant.

Le système d'information est constitué d'une pluralité de biens informatiques, i.e. d'actifs informatiques également désignés comme des « biens supports » selon la terminologie utilisée par l'ANSSI dans la méthode EBIOS RM. Une cartographie du système d'information peut être réalisée sous la forme d'un graphe dont les nœuds représentent les biens informatiques (réseaux, terminaux utilisateurs, applications, etc.) constituant le système d'information et dont les arêtes représentent les liens de propagation possibles d'une attaque informatique entre les biens informatiques (par exemple, un attaquant peut se propager d'une application web au serveur hébergeant celle-ci).

L'attaque informatique a pour objectif de se propager depuis un ou plusieurs biens informatiques d'entrée sur un ou plusieurs chemins de compromission chacun constitué d'une succession d'au moins un bien informatique incluant un bien informatique d'entrée. Dans un mode de réalisation possible, l'attaque vise à atteindre un ou plusieurs biens informatiques cible depuis le ou les biens informatiques d'entrée en se propageant de proche en proche sur un ou plusieurs chemins de compromission chacun constitué d'une succession de biens informatiques (i.e. des biens successivement reliés par des arêtes du graphe) incluant un bien informatique d'entrée et un bien informatique cible. Dans un autre mode de réalisation possible, un bien informatique cible constitue également un bien informatique d'entrée, le chemin de compromission correspondant se limitant à ce bien.

L'attaque informatique est menée selon un Mode Opératoire d'Attaque (MOA) donné, i.e. sa carte d'identité technique et contextuelle regroupant des informations contextuelles et l'ensemble des tactiques, techniques, procédures utilisées par l'attaquant.

Le MOA pour lequel l'analyse de vulnérabilité est réalisée est typiquement représentatif d'un scénario de risque correspondant à la combinaison d'un type d'attaque (rançongiciel ou espionnage par exemple), d'un type d'acteur malveillant (étatique ou criminel par exemple) et d'un contexte de l'organisation visée (secteur d'activité, taille, pays par exemple).

En particulier, le MOA considéré peut être un MOA « représentatif » et agrégé des modes opératoires déployés dans la réalité par les groupes d'attaquants pertinents pour le scénario considéré (par exemple les différentes menaces persistantes avancées dites « Advanced Persistent Threats » comme APT28, APT29, ou encore les groupes exploitant des rançongiciels comme Sodinokibi).

Pour chaque bien informatique d'un chemin de compromission, et pour chaque phase de la chaîne de frappe ("kill chain ») d'intrusion, l'attaque informatique menée par l'attaquant peut comprendre une ou plusieurs procédures d'attaque visant à mettre en échec le bien informatique.

La chaîne de frappe d'intrusion décrit les phases d'une cyberattaque, parmi lesquelles la phase de livraison (l'attaquant transmet l'arme à la cible via par exemple des pièces jointes de courrier électronique, des sites Web ou des clés USB), la phase d'exploitation (le code du logiciel malveillant se déclenche et agit sur le réseau cible pour exploiter la vulnérabilité identifiée), la phase d'installation (le logiciel malveillant installe un point d'accès, i.e. une porte dérobée, utilisable par un attaquant externe), la phase de commandement et contrôle (le logiciel malveillant offre à l'attaquant un accès permanent au réseau cible) et la phase d'actions sur l'objectif (l'attaquant prend des mesures pour atteindre ses objectifs, tels que l'exfiltration de données, la destruction de données ou le chiffrement contre rançon).

Les procédures d'attaque peuvent dépendre non seulement de l'attaquant, mais également de la nature du bien informatique visé (par exemple un serveur Web, un ordinateur bureautique ou un système de contrôle industriel) et de l'objectif recherché par l'attaquant sur ce dernier (par exemple simple point de rebond dans le réseau, espionnage des données, sabotage, déni de service, etc.). La liste des procédures d'attaque exécutées par le MOA peut par exemple être celle fournie par le référentiel MITRE ATT&CK (« Adversarial Tactics, Techniques, and Common Knowledge » pour Tactiques, techniques et connaissances de base des adversaires).

Une ou plusieurs mesures de sécurité peuvent être activées au niveau de chaque bien informatique pour assurer une défense contre les procédures d'attaque visant à mettre en échec le bien informatique.

Une mesure de sécurité peut assurer une ou plusieurs fonctions de cybersécurité et être ainsi implémentée au sein d'une ou plusieurs procédures de cybersécurité chacune spécifiquement associée à une fonction de sécurité. Typiquement, et conformément au référentiel de sécurité NIST, chaque bien informatique peut mettre en œuvre :

- une procédure de cybersécurité qui assure une défense passive, par exemple :

   ○ une procédure de cybersécurité du type identification, qui regroupe l'ensemble des mesures de sécurité qui assurent la fonction de cybersécurité du type identification, i.e. les mesures servant à mieux connaître son environnement, son système d'information, etc. (par exemple répertorier ses actifs matériels et logiciels ou réaliser des scans de vulnérabilité); et/ou
   ○ une procédure de cybersécurité du type protection, qui regroupe l'ensemble des mesures de sécurité qui assurent la fonction de cybersécurité du type protection, i.e. les contremesures protégeant le système d'information en continu contre des attaques (par exemple assurer le contrôle des accès, sensibiliser les employés, chiffrer les données, déployer des logiciels de protection des terminaux du type antivirus ou du type détection et réponse des points d'accès ;

- une procédure de cybersécurité qui assure une défense active, par exemple :

   ○ une procédure de cybersécurité du type détection, qui regroupe l'ensemble des mesures de sécurité qui assurent la fonction de cybersécurité du type détection, i.e. les mesures servant à détecter une cyber-attaque (par exemple assurer la collecte des journaux d'événements, surveiller en continu les anomalies, bénéficier de flux d'indicateurs de compromission à mettre en détection) ; et/ou
   ○ une procédure de cybersécurité du type réponse, qui regroupe l'ensemble des mesures de sécurité qui assurent la fonction de cybersécurité du type réponse, i.e. les mesures servant à réagir pro-activement à une cyber-attaque (par exemple isoler certaines parties du SI, mettre en liste noire certains indicateurs de compromission, bloquer les comptes d'administration) ; et/ou

○ une procédure de cybersécurité du type remédiation, qui regroupe l'ensemble des mesures de sécurité qui assurent la fonction de cybersécurité du type remédiation, i.e. les mesures servant à rétablir plus rapidement le système d'information après une attaque (par exemple disposer de sauvegardes de ses données face à un rançongiciel, mettre en place des solutions de continuité d'activité sur des environnements déconnectés du SI).

De manière correspondante, les procédures d'attaque exécutées par le MOA qui visent à mettre en échec un bien informatique peuvent être associées aux mesures de défense correspondantes et notamment être regroupées en procédures visant à compromettre une procédure de cybersécurité assurant une défense passive et en mesures visant à compromettre une procédure de cybersécurité assurant une défense active. Plus spécifiquement les procédures d'attaque peuvent être regroupées en procédures visant à compromettre la procédure de cybersécurité du type protection, procédures visant à compromettre la procédure de cybersécurité du type détection et procédures visant à compromettre la procédure de cybersécurité du type réponse.

En venant considérer les procédures d'attaque non seulement en fonction de l'attaquant, mais également en fonction de la nature du bien informatique visé et de l'objectif recherché par l'attaquant, l'invention réalise une modélisation granulaire et précise des actions effectuées par l'attaquant au cours de la tentative de compromission (par exemple un premier bien n'est qu'un rebond au sein du réseau et seule son intégrité est alors ciblée avec des procédures d'attaque spécifiques, alors qu'un deuxième bien doit être compromis en confidentialité et que d'autres procédures d'attaque pour collecter et exfiltrer les données sensibles sont alors déployées par l'attaquant). Une telle modélisation granulaire et précise s'étend aux mesures de défense qui se révèlent être pertinentes pour chaque bien informatique et pour chaque type d'attaque. L'invention permet ainsi de considérer des techniques d'attaque et de défense propres à chaque bien informatique (par exemple pour tenir compte du fait que les catalogues offensifs et défensifs sont différents entre un ordinateur de bureau, un smartphone, un outil de production, etc.).

Par ailleurs, dans le cadre de l'invention, les procédures d'attaque et de cybersécurité considérées ne sont pas limitées aux seules vulnérabilités CVE (« Common Vulnerabilities and Exposures »). L'exploitation d'une vulnérabilité CVE par un attaquant correspond en effet à un sous-ensemble limitatif des procédures d'attaque, de même que la correction de vulnérabilités est une mesure de défense parmi beaucoup d'autres (par exemple déployer des systèmes de protection des terminaux, gérer les comptes d'administration, sensibiliser les employés, etc.) que l'invention permet de prendre en compte. L'invention permet ainsi de prendre en considération des procédures d'attaque qui sont exploitées dans la plupart des cyberattaques et qui ne relèvent de l'exploitation de CVE, comme :

- l'exploitation de failles « humaines », dont l'hameçonnage ciblé qui peut permettre de récupérer des identifiants ou des données sensibles ;
- les dénis de service ;
- les attaques par force brute ;
- la mise en place d'un système de communication de Commande & Contrôle entre l'attaquant et son programme malveillant ;
- de nombreuses techniques de scan, latéralisation et écoute passive au sein d'un réseau ;
- toutes les actions réalisées par l'attaquant après avoir obtenu des privilèges suffisants, et donc ne nécessitant plus d'exploiter des failles (ex : chiffrer les données, exfiltrer les données, saboter du matériel, etc.).

L'invention permet pareillement de prendre en considération des mesures de sécurité cruciales au sein des organisations et qui ne sont pas liées à la correction de vulnérabilité CVE, comme celles citées plus haut.

*Simulations de Monte Carlo*

Le procédé selon l'invention vient estimer la probabilité de succès de l'attaque informatique menée par l'attaquant sur le SI pour une phase donnée de la chaîne d'attaque d'intrusion. Ce procédé est ainsi de préférence répété pour chacune des phases (livraison, exploitation, installation, etc.,) de la chaîne d'attaque d'intrusion.

Pour chaque phase de la chaîne d'attaque d'intrusion, le procédé selon l'invention réalise des simulations de Monte Carlo afin d'estimer la probabilité de succès de l'attaque informatique menée par l'attaquant à compromettre un bien informatique donné. Le procédé comprend alors plus particulièrement, pour chacun des chemins de compromission considéré (par exemple tous les chemins possibles dans le graphe cartographiant le SI), la réalisation d'une pluralité de simulations de propagation de l'attaque informatique sur le chemin de compromission, où dans chaque simulation il est déterminé si et comment l'attaque a réussi ou non à se propager dans le système d'information.

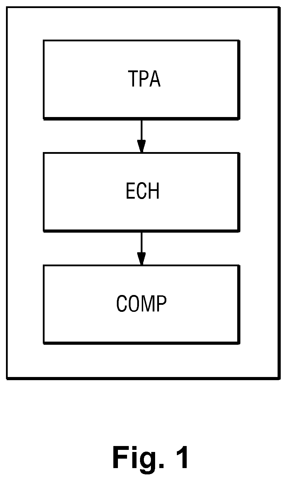

En référence à la figure 1, chaque simulation comprend la mise en œuvre des étapes suivantes pour chacun des biens informatiques du chemin de compromission.

Chaque simulation comprend, pour chaque bien informatique, une étape TPA consistant à déterminer pseudo-aléatoirement :

- une capacité d'une procédure de cybersécurité assurant une défense passive (par exemple la procédure du type protection) qui est activée au niveau du bien informatique à bloquer l'attaque informatique,
- une capacité d'une procédure de cybersécurité assurant une défense active (par exemple la procédure du type réponse) qui est activée au niveau du bien informatique à bloquer l'attaque informatique,
- une capacité de l'attaque informatique à compromettre la procédure de cybersécurité assurant la défense passive, et
- une capacité de l'attaque informatique à compromettre la procédure de cybersécurité assurant la défense active.

En d'autres termes, cette étape TPA consiste à :

- déterminer un premier score défensif SDP représentatif de la capacité d'une procédure de cybersécurité assurant une défense passive du bien informatique à bloquer l'attaque informatique, en réalisant au moins un tirage aléatoire avec une probabilité de sélection qui dépend d'une sophistication de la procédure de cybersécurité assurant la défense passive et d'une incertitude sur ladite sophistication ;
- déterminer un premier score offensif SOP représentatif de la capacité de l'attaque informatique à compromettre la procédure de cybersécurité assurant la défense passive du bien informatique, en réalisant au moins un tirage aléatoire avec une probabilité de sélection qui dépend d'une sophistication de l'attaque informatique à compromettre la procédure de cybersécurité assurant la défense passive et d'une incertitude sur ladite sophistication ;
- déterminer un deuxième score défensif SDR représentatif de la capacité d'une procédure de cybersécurité assurant une défense active du bien informatique à bloquer l'attaque informatique, en réalisant au moins un tirage aléatoire avec une probabilité de sélection qui dépend d'une sophistication de la procédure de cybersécurité assurant la défense active et d'une incertitude sur ladite sophistication ;
- déterminer un deuxième score offensif SOR représentatif de la capacité de l'attaque informatique à compromettre la procédure de cybersécurité assurant la défense active du bien informatique, en réalisant au moins un tirage aléatoire avec une probabilité de sélection qui dépend d'une sophistication de l'attaque informatique à compromettre la procédure de cybersécurité assurant la défense active et d'une incertitude sur ladite sophistication.

Chaque simulation comprend par ailleurs, pour chaque bien informatique, une étape ECH consistant à déterminer une mise en échec du bien informatique en comparant, d'une part, la capacité de la procédure de cybersécurité assurant la défense passive à bloquer l'attaque informatique avec la capacité de l'attaque informatique à compromettre la procédure de cybersécurité assurant la défense passive et, d'autre part, la capacité de la procédure de cybersécurité assurant la défense active à bloquer l'attaque informatique avec la capacité de l'attaque informatique à compromettre la procédure de cybersécurité assurant la défense active (i.e. en comparant, d'une part, le premier score défensif et le premier score offensif et, d'autre part, le deuxième score défensif et le deuxième score offensif).

Et chaque simulation comprend également, pour chaque bien informatique, une étape COMP consistant à déterminer une compromission du bien informatique en cas de mise en échec déterminée dudit bien et de chacun du ou des biens informatiques en amont dudit bien dans le chemin de compromission lorsque ledit bien n'est pas le bien informatique d'entrée.

A l'issue de ces simulations, le procédé comprend une étape consistant à déterminer un indicateur de vulnérabilité d'un bien informatique du chemin de compromission sur la base du nombre de simulations pour lesquelles une compromission dudit bien a été déterminée. Cette étape est par exemple menée pour le bien informatique cible. Elle peut être réalisée pour tout ou partie des biens informatiques du chemin de compromission.

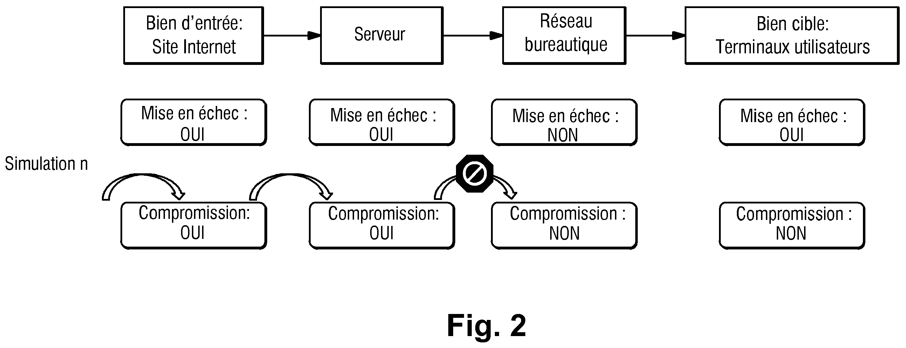

On a représenté sur la figure 2 un exemple de chemin de compromission dont le bien d'entrée est le site Internet d'une organisation et le bien cible correspond aux terminaux utilisateurs des salariés de l'organisation. L'attaque est susceptible de se propager du bien d'entrée au bien cible par l'intermédiaire successivement d'un serveur et d'un réseau bureautique. Lors d'une simulation, il est déterminé une mise en échec du site Internet, une mise en échec du serveur et une mise en échec des terminaux utilisateurs. En revanche, le réseau bureautique n'est pas mis en échec. On en déduit une compromission du site Internet et du serveur et une absence de compromission du réseau bureautique et des terminaux utilisateurs lors de cette simulation de l'attaque. A l'issue de l'ensemble des simulations, on vient déterminer un indicateur de vulnérabilité d'un bien du chemin de compromission sur la base du nombre de simulations pour lesquelles une compromission dudit bien a été déterminée. Par exemple, si le bien est compromis dans 75% des simulations, son indicateur de vulnérabilité est de 0,75 ce qui exprime que la probabilité de succès de l'attaque à atteindre et compromettre ce bien pour le MOA considéré est de 75%.

Il est par ailleurs possible à l'issue d'une simulation de déterminer que l'attaque est bloquée en cas de mise en échec non déterminée pour au moins un des biens informatiques du chemin de compromission. Le procédé peut alors comprendre la détermination d'un niveau de profondeur de l'attaque informatique bloquée sur le chemin de compromission comme étant le bien informatique précédant le premier bien informatique du chemin de compromission pour lequel une mise en échec n'est pas déterminée. Reprenant l'exemple de la figure 2, l'attaque a compromis jusqu'au serveur.

Ce qui précède est valide pour un chemin de compromission et non pour l'attaque dans son intégralité qui peut emprunter différents chemins en parallèle (l'attaquant peut par exemple tester plusieurs chemins et mettre les biens les constituant en échec, avant de trouver ou pas un chemin qui lui permettra d'atteindre sa cible). La profondeur de l'attaque complète peut alors être par exemple définie comme la longueur du plus long chemin contenant exclusivement des biens supports successivement compromis sur un chemin de compromission.

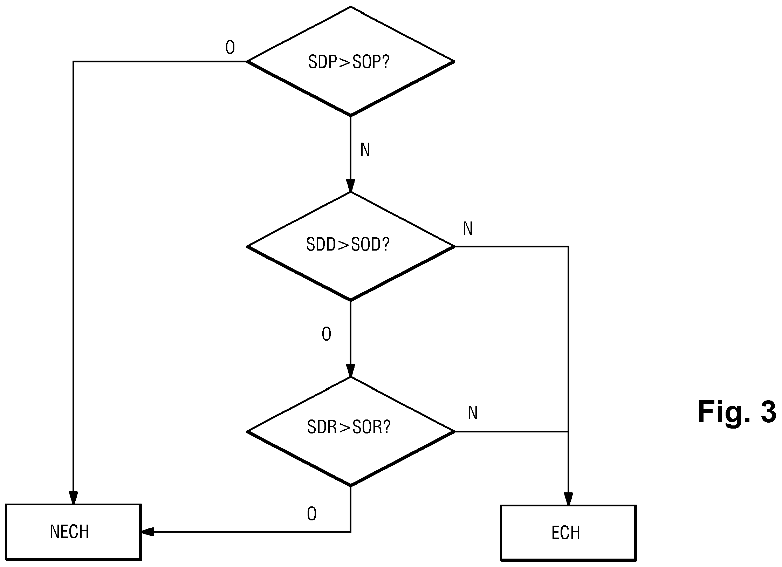

L'invention présente ainsi l'avantage de permettre d'étudier la profondeur que l'attaquant a réussi à atteindre dans le SI. Même s'il n'a pas réussi à atteindre son objectif final (la compromission du bien informatique cible, par exemple les terminaux utilisateurs dans l'exemple de la figure 3), il a pu réussir à compromettre des biens sur son chemin. Des impacts seront donc malgré tout subis par l'organisation et cet état de fait peut être modélisé par l'invention en venant par exemple associer un profil d'impact (financier mais aussi pertes matérielles, de données, des communications, etc.) à la compromission de chaque bien et fournir ainsi un indicateur d'impact de l'attaque même si celle-ci est bloquée et ne compromet pas le bien cible.

Le procédé peut en outre comprendre la détermination que l'attaque est bloquée par la procédure de cybersécurité assurant la défense passive ou par la procédure de cybersécurité assurant la défense active d'un bien informatique déterminé comme n'étant pas mis en échec. Notamment, le procédé peut déterminer si l'attaque est bloquée par une procédure de type protection ou par la combinaison d'une procédure de type détection ou d'une procédure de type réponse. A contrario, le procédé peut comprendre la détermination que l'attaque n'est pas bloquée par l'une de la procédure de cybersécurité assurant la défense passive et de la procédure de cybersécurité assurant la défense active d'un bien informatique. Il est ainsi possible de déterminer si l'attaque est ou non bloquée au niveau d'un bien informatique par l'une ou l'autre des procédures de cybersécurité de type protection ou de type réponse ou encore de déterminer si l'attaque est ou non détectée par la procédure de cybersécurité de type détection. Des recommandations peuvent alors être émises pour l'amélioration de l'une et/ou l'autre des différentes procédures de cybersécurité activées au niveau de chaque bien informatique.

Le procédé selon l'invention peut ainsi comprendre une étape de calcul d'impact de l'attaque informatique qui délivre un indicateur d'impact, i.e. une donnée quantitative qui peut être un impact financier mais aussi un simple score, une durée d'incapacité de production, un impact humain pour des hôpitaux ou des systèmes de défense, etc.

Ce calcul d'impact prend en compte, d'une part, le niveau de profondeur atteint par l'attaque et la nature des actions réussies sur chaque bien compromis et, d'autre part, les procédures de cybersécurité du type remédiation activées au niveau des biens compromis. Les actions réussies viennent typiquement augmenter l'indicateur d'impact en fonction de leur nature (par exemple si un premier bien est compromis en Intégrité et qu'un deuxième bien est compromis en Confidentialité, alors la probabilité qu'un indicateur d'impact métier soit plus élevé est de N%,), tandis que les procédures de cybersécurité du type remédiation permettent de réduire cet indicateur.

Ce calcul d'impact peut notamment exploiter un score de remédiation calculé de manière similaire aux scores défensifs décrits ci-après, en exploitant des tirages aléatoires contrôlés par la sophistication de chacune des mesures de sécurité qui assurent la fonction de cybersécurité du type remédiation et l'incertitude sur cette sophistication. Ce score permet de venir diminuer l'impact potentiel d'une action offensive réussie sur un bien.

Ainsi, le procédé selon l'invention peut comprendre pour chaque simulation une étape consistant, pour chacun des biens du chemin de compromission, à déterminer pseudo-aléatoirement une capacité d'une procédure de cybersécurité du type remédiation activée au niveau du bien informatique à remédier à l'attaque informatique et une étape consistant à calculer un impact de l'attaque au cours de laquelle un impact associé à un bien pour lequel une compromission est déterminée est réduit au moyen de la capacité de la procédure de cybersécurité du type remédiation activée au niveau dudit bien. Un impact SI peut alors être calculé pour chaque simulation en venant par exemple sommer les impacts associés à chaque bien compromis. Puis à l'issue de l'ensemble des simulations, une distribution de probabilité d'impact peut être calculée à partir des impacts SI calculés pour chacune des simulations (par exemple 30% des simulations résultent en une durée d'incapacité de production de 2 heures, 20% en une en une durée d'incapacité de production de 5 heures, 10% en une durée d'incapacité de production de 10 heures, etc.).

L'invention présente l'avantage de fournir un calcul d'impact précis en permettant de ne pas considérer que l'impact est seulement déclenché de façon binaire (attaque réussie ou non), et surtout de pouvoir décomposer l'impact total d'une attaque sur chaque action et sur chaque bien. Ce calcul d'impact constitue une donnée précieuse pour l'aide à la décision au sein des organisations, et pour orienter la vigilance sur certains biens plus que sur d'autres.

Dans un mode de réalisation possible, l'invention comprend en outre la réitération des étapes de réalisation d'une pluralité de simulations et de détermination d'un indicateur de compromission pour un autre chemin de compromission. L'invention permet ainsi de considérer tous les chemins possibles que l'attaque est susceptible de suivre afin de compromettre le SI.

Dans un autre mode de réalisation possible, l'invention comprend la réitération des étapes de réalisation d'une pluralité de simulations et de détermination d'un indicateur de compromission après modification d'une procédure de cybersécurité activée au niveau d'un des biens informatiques du chemin de compromission et l'évaluation de l'impact de ladite modification par comparaison des indicateurs de compromission déterminés par la première itération desdites étapes et par ladite réitération desdites étapes.

Par modification d'une procédure de cybersécurité, on entend notamment ici l'activation d'une nouvelle mesure de sécurité ou la désactivation d'une mesure existante, ou encore l'amélioration ou la dégradation de la sophistication d'une mesure de sécurité déjà déployée. L'invention constitue ainsi un outil d'aide à la décision pour l'établissement de stratégies de défense. Elle permet notamment d'évaluer, avant même leur déploiement, l'efficacité (comparaison des indicateurs de compromission, des niveaux de profondeur atteints, des chemins empruntés) de nouvelles solutions de sécurité.

Enfin le procédé selon l'invention peut bien entendu être réitéré pour étudier l'impact d'un autre MOA sur le SI de l'organisation.

Un avantage de l'invention est qu'elle permet de simuler l'ensemble des réactions possibles d'une organisation lors d'une attaque, et pas seulement la phase de Protection passive correspondant entre autres à la correction des vulnérabilités CVE connues. L'invention permet ainsi d'identifier des manquements dans la maturité défensive d'une organisation sur toutes les fonctions du NIST et sur toutes les mesures de défenses, générer des recommandations pertinentes qu'il est impossible de calculer avec les CVE (par exemple disposer d'un SOC interne, sensibiliser ses employés, etc.) et simuler le potentiel impact positif de ces recommandations sur le risque en réitérant le procédé avec des capacités différentes des procédures de cybersécurité.

*Tirage pseudo-aléatoire*

On détaille ci-après un mode de réalisation possible de l'étape TPA consistant, pour chaque simulation et chaque bien du chemin de compromission, à déterminer pseudo-aléatoirement les différentes capacités. Dans ce mode de réalisation, l'étape TPA peut notamment comprendre le tirage de valeurs pseudo-aléatoires formant :

- le premier score offensif SOP représentatif de la capacité de l'attaque informatique à compromettre la procédure de cybersécurité assurant une défense passive du bien (celle du type protection dans l'exemple qui suit) :
- le deuxième score offensif SOR représentatif de la capacité de l'attaque informatique à compromettre la procédure de cybersécurité assurant une défense active du bien (celle du type réponse dans l'exemple qui suit) ;
- le premier score défensif SDP représentatif de la capacité de la procédure de cybersécurité assurant la défense passive du bien à bloquer l'attaque informatique ;
- le deuxième score défensif SDR représentatif de la capacité de la procédure de cybersécurité assurant la défense active du bien à bloquer l'attaque informatique.

L'étape ECH consistant à déterminer une mise en échec du bien informatique peut alors comprendre la comparaison du premier score offensif SOP avec le premier score défensif SDP et la comparaison du deuxième score offensif SOR avec le deuxième score défensif SDR.

On a vu précédemment que l'attaque informatique menée par l'attaquant sur un bien informatique peut comprendre une ou plusieurs procédures d'attaque visant à compromettre la procédure de cybersécurité du type protection du bien informatique ou la procédure de cybersécurité du type réponse du bien informatique.

L'au moins un tirage aléatoire réalisé à chaque simulation avec une probabilité de sélection qui dépend d'une sophistication de l'attaque informatique à compromettre la procédure de cybersécurité assurant la défense passive, respectivement la défense active, et d'une incertitude sur ladite sophistication peut alors comprendre, pour chacun des biens informatiques du chemin de compromission et pour chacune des procédures d'attaque visant à compromettre la procédure de cybersécurité du type protection, respectivement du type réponse, le tirage aléatoire d'un premier, respectivement deuxième, indicateur d'offensivité avec une probabilité de sélection qui dépend d'une sophistication de la procédure d'attaque et d'une incertitude sur ladite sophistication. Ces indicateurs d'offensivité prennent typiquement une valeur comprise entre 0 et 1.

Le tirage aléatoire peut par exemple être réalisé en suivant une loi normale dont l'espérance est fixée par la sophistication de la procédure d'attaque et dont l'écart-type est fixé par incertitude sur ladite sophistication. Plus particulièrement, la sophistication de la procédure d'attaque dépend du type d'acteur malveillant (par exemple criminel, étatique, activiste, etc.) et de la sophistication associée, de la maîtrise de cette procédure d'attaque par le MOA concerné, de ses ressources connues, de sa motivation potentielle pour mener à bien ce scénario d'attaque sur cette victime, etc. L'incertitude sur cette sophistication dépend de l'incertitude sur les données servant à calibrer l'espérance, par exemple si le MOA est très documenté ou pas, si beaucoup d'attaques précédentes peuvent lui être attribuées, etc.

La valeur pseudo-aléatoire formant le premier, respectivement le deuxième, score offensif est alors déterminée à partir des premiers, respectivement deuxièmes, indicateurs d'offensivité tirés pour chacune des procédures d'attaque visant à compromettre la procédure de cybersécurité du type protection, respectivement du type réponse, par exemple en venant moyenner ces premiers, respectivement deuxièmes, indicateurs d'offensivité. La moyenne peut être une moyenne pondérée pour mettre en avant celles des procédures d'attaque qui sont le plus souvent exécutées par le MOA. Notamment, lorsque le MOA considéré est un MOA « représentatif » issu de l'agrégation de plusieurs MOA pertinents, chaque procédure d'attaque peut être pondérée en fonction de la proportion de MOA pertinents qui l'utilisent.

On a vu précédemment que la procédure de cybersécurité du type protection, respectivement du type réponse, activée au niveau d'un bien informatique peut comprendre une ou plusieurs mesures de sécurité qui assurent une fonction de cybersécurité du type protection, respectivement du type réponse, contre les procédures d'attaque visant à compromettre la procédure de cybersécurité du type protection, respectivement du type réponse.

L'au moins un tirage aléatoire réalisé à chaque simulation avec une probabilité de sélection qui dépend d'une sophistication de la procédure de cybersécurité assurant la défense passive, respectivement la défense active, et d'une incertitude sur ladite sophistication peut alors comprendre, pour chacun des biens informatiques du chemin de compromission et pour chacune des mesures de sécurité qui assurent une fonction de cybersécurité du type protection, respectivement du type réponse, le tirage aléatoire d'un premier, respectivement deuxième, indicateur de défense avec une probabilité de sélection qui dépend d'une sophistication de la mesure de sécurité et d'une incertitude sur ladite sophistication. Ces indicateurs de défense prennent typiquement une valeur comprise entre 0 et 1.

Le tirage aléatoire peut par exemple être réalisé en suivant une loi normale dont l'espérance est fixée par la sophistication de la mesure de sécurité et dont l'écart-type est fixé par incertitude sur ladite sophistication. Plus particulièrement, la sophistication de la mesure de sécurité dépend du niveau de maturité défensive de l'organisation pour cette mesure de sécurité, qui peut être évaluée sur plusieurs dimensions (par exemple existence d'une politique pour cette mesure ou pas, déploiement de cette politique, automatisation de cette politique, rapport associé, etc.). L'incertitude sur cette sophistication dépend de l'incertitude sur les données servant à calibrer l'espérance, par exemple si peu de données sont disponibles pour démontrer cette maturité ou s'il existe un doute quant à l'implémentation de la mesure défensive.

La valeur pseudo-aléatoire formant le premier, respectivement deuxième, score défensif peut alors être déterminée à partir des premiers, respectivement deuxièmes, indicateurs de défense tirés pour chacune des mesures de sécurité qui assurent une fonction de cybersécurité du type protection, respectivement du type réponse, par exemple en venant moyenner ces premiers, respectivement deuxièmes, indicateurs de défense. La moyenne peut être une moyenne pondérée pour mettre en avant celles des mesures de sécurité qui sont le plus efficaces contre le MOA. On a vu précédemment que chaque procédure d'attaque peut être pondérée lorsque l'on considère un MOA « représentatif ». La pondération d'une procédure d'attaque peut similairement être appliquée aux mesures de sécurité qui permettent de s'en prémunir. Dans le cas où une mesure de défense peut être efficace contre plusieurs procédures d'attaque ayant des pondérations différentes, il est possible de réaliser la somme des pondérations pertinentes et de normaliser le tout in fine.

De manière similaire à ce qui vient d'être présenté, l'invention peut également comprendre, pour chacun des biens et pour chacune des simulations, la détermination d'une valeur pseudo-aléatoire formant un troisième score défensif représentatif d'une capacité d'une procédure de cybersécurité du type détection à détecter l'attaque, d'une valeur pseudo-aléatoire formant un troisième score offensif représentatif d'une capacité de l'attaque informatique à compromettre la procédure de cybersécurité du type détection. L'invention peut également comprendre la détermination d'un quatrième score défensif représentatif d'une capacité d'une procédure de cybersécurité du type identification.

Un exemple de détermination du score défensif représentatif d'une capacité de la procédure de cybersécurité du type protection à bloquer l'attaque est le suivant. Cet exemple peut également être suivi pour la détermination des autres scores défensifs.

On considère tout d'abord les MOA pertinents au vu du scénario considéré (type d'attaque et type d'acteur malveillant), ces MOA pertinents étant destinés à être agrégés pour déterminer le MOA « représentatif ». On attribue une intensité (c'est-à-dire un poids) à ces MOA pertinents en fonction de leur intérêt pour le contexte (par exemple géographique et sectoriel) de la cible, notée $\rho(MOA_i)$.

Pour chaque MOA, on récupère la liste des procédures d'attaque et on attribue un poids à chacune de ces techniques : plus une procédure d'attaque $T_j$ est maîtrisée par le $MOA_i$, plus le poids associé $0 \leq w(MOA_i, T_j) \leq 1$ est proche de 1. On détermine ainsi une matrice de poids :

$$W = \begin{pmatrix} w(MOA_1, T_1) & \cdots & w(MOA_1, T_m) \\ \vdots & \ddots & \vdots \\ w(MOA_n, T_1) & \cdots & w(MOA_n, T_m) \end{pmatrix}$$

Chaque procédure d'attaque est elle-même liée aux mesures de sécurité associées au bien informatique considéré qui permettent de s'en prémunir. Ce lien est pondéré par l'efficacité $0 \leq \varepsilon(T_i, D_j) \leq 1$ de la mesure de sécurité $D_j$ sur la procédure d'attaque $T_i$. On détermine ainsi une matrice d'efficacité :

$$E = \begin{pmatrix} \varepsilon(T_1, D_1) & \cdots & \varepsilon(T_1, D_p) \\ \vdots & \ddots & \vdots \\ \varepsilon(T_m, D_1) & \cdots & \varepsilon(T_m, D_p) \end{pmatrix}$$

En combinant ces deux matrices, on obtient une matrice de pondération de l'efficacité de chaque mesure de sécurité associée au bien informatique considéré pour chacun des MOA :

$$K = W \times E = \begin{pmatrix} \kappa_{1,1} & \cdots & \kappa_{1,p} \\ \vdots & \ddots & \vdots \\ \kappa_{n,1} & \cdots & \kappa_{n,p} \end{pmatrix}$$, avec $\kappa_{i,j} = $

$\sum_{k=1}^{m} w(MOA_i, T_k) \times \varepsilon(T_k, D_j)$ le poids de la mesure de sécurité $D_j$ contre le $MOA_i$.

La pondération finale $\eta(D_j)$ de la mesure de sécurité $D_j$ pour le scénario et le contexte considérés est alors calculé comme suit en compte l'intensité du ciblage $\rho$ calculée ci-dessus pour chacun des MOA :

$$\eta(D_j) = \sum_{i=1}^{n} \rho(MOA_i) \times \kappa_{i,j}$$

Le score défensif représentatif d'une capacité de la procédure de cybersécurité du type protection à bloquer l'attaque peut alors s'exprimer comme la moyenne pondérée suivante des valeurs aléatoires *VA* (*D_i*) faisant l'objet du tirage avec des probabilités de sélection qui dépendent de la sophistication des mesures de sécurité du type protection (*i* ∈ {*Protection*}) et de l'incertitude sur ces sophistications :

$$\frac{\sum_{i \in \{Protection\}} \eta(D_i) \times VA(D_i)}{\sum_{i \in \{Protection\}} \eta(D_i)}.$$

*Confrontation des scores*

Un exemple de réalisation préférentielle de la confrontation des scores offensifs et défensifs au cours de l'étape ECH pour déterminer une éventuelle mise en échec d'un bien informatique lors d'une simulation est illustrée sur la figure 3. Dans cet exemple, la détermination d'une mise en échec d'un bien informatique comprend également la comparaison de la capacité de l'attaque informatique à compromettre la procédure de cybersécurité du type détection activée au niveau du bien informatique avec la capacité de cette procédure de cybersécurité du type détection à détecter l'attaque.

Plus particulièrement, une absence de mise en échec d'un bien informatique est déterminée :

- lorsque la capacité de la procédure de cybersécurité du type protection à bloquer l'attaque informatique est supérieure à la capacité de l'attaque informatique à compromettre cette procédure de cybersécurité du type protection, ou
- dans le cas contraire, à la fois lorsque la capacité de la procédure de cybersécurité du type détection à détecter l'attaque informatique est supérieure à la capacité de l'attaque informatique à compromettre cette procédure de cybersécurité du type détection et lorsque la capacité de la procédure de cybersécurité du type réponse à bloquer l'attaque informatique est supérieure à la capacité de l'attaque informatique à compromettre cette procédure de cybersécurité du type réponse.

Comme représenté sur la figure 3, il peut tout d'abord être vérifié si le premier score défensif SDP est supérieur au premier score offensif SOP (ses scores étant liés à la fonction cyber de protection). Dans l'affirmative (« O »), le bien n'est pas mis en échec (bloc NECH). Dans la négative, (« N »), il est vérifié si le troisième score défensif SDD est supérieur au troisième score offensif SOD (ses scores étant liés à la fonction cyber de détection). Dans la négative (« N »), le bien est mis en échec (bloc ECH). Dans l'affirmative (« O »), il est vérifié si le deuxième score défensif SDR est supérieur au deuxième score offensif SOR (ses scores étant liés à la fonction cyber de réponse). Dans la négative, (« N »), le bien est mis en échec (bloc ECH). Dans l'affirmative (« O »), le bien n'est pas mis en échec (bloc NECH).

Dans une réalisation possible, chacune des capacités de la procédure de cybersécurité du type protection, respectivement du type réponse, peut bénéficier d'un bonus basé sur une capacité d'une procédure de cybersécurité du type identification activée au niveau du bien informatique. La capacité de la procédure de cybersécurité du type détection peut également bénéficier d'un tel bonus. Ces bonus viennent concrétiser le fait que bien connaître son réseau et ses actifs implique une meilleure maturité défensive globale.

Ainsi, par exemple, une mise en échec n'est pas déterminée lorsque la fonction logique suivante est respectée : (BP*SDI + (1-BP)*SDP>SOP) OU ((BD*SDI + (1-BD)*SDD>SOD) ET (BR*SDI + (1-BR)*SDR>SOR)) =1 , avec SDI le quatrième score défensif lié à la fonction cyber d'identification, BP une valeur comprise entre 0 et 1 fournissant un bonus au score défensif lié à la fonction cyber d'identification, BD une valeur comprise entre 0 et 1 fournissant un bonus au score défensif lié à la fonction cyber de détection et BR une valeur comprise entre 0 et 1 fournissant un bonus au score défensif lié à la fonction cyber de réponse. Dans une réalisation possible BP=BD=BR.

L'invention n'est pas limitée au procédé décrit précédemment mais s'étend également à une unité de traitement de données configurée pour mettre en œuvre ce procédé ainsi qu'à un produit programme d'ordinateur comprenant des instructions qui, lorsque le programme est exécuté par un ordinateur, conduisent celui-ci à mettre en œuvre ce procédé.

## Revendications

**1.** Procédé mis en œuvre par ordinateur d'analyse de la vulnérabilité d'un système d'information à une attaque informatique menée par un attaquant, l'attaque informatique se propageant sur un ou plusieurs chemins de compromission chacun constitué d'une succession d'au moins un bien informatique incluant un bien informatique d'entrée, le procédé comprenant pour chacun du ou des chemins de compromission :

    • la réalisation d'une pluralité de simulations de propagation de l'attaque informatique sur le chemin de compromission, où chaque simulation comprend pour chacun des biens informatiques du chemin de compromission les étapes consistant à :

        ∘ déterminer un premier score défensif (SDP) représentatif d'une capacité d'une procédure de cybersécurité assurant une défense passive du bien informatique à bloquer l'attaque informatique, en réalisant au moins un tirage aléatoire avec une probabilité de sélection qui dépend d'une sophistication de la procédure de cybersécurité assurant la défense passive et d'une incertitude sur ladite sophistication ;
        ∘ déterminer un premier score offensif (SOP) représentatif d'une capacité de l'attaque informatique à compromettre la procédure de cybersécurité assurant la défense passive du bien informatique, en réalisant au moins un tirage aléatoire avec une probabilité de sélection qui dépend d'une sophistication de l'attaque informatique à compromettre la procédure de cybersécurité assurant la défense passive et d'une incertitude sur ladite sophistication ;
        ∘ déterminer un deuxième score défensif (SDR) représentatif d'une capacité d'une procédure de cybersécurité assurant une défense active du bien informatique à bloquer l'attaque informatique, en réalisant au moins un tirage aléatoire avec une probabilité de sélection qui dépend d'une sophistication de la procédure de cybersécurité assurant la défense active et d'une incertitude sur ladite sophistication ;
        ∘ déterminer un deuxième score offensif (SOR) représentatif d'une capacité de l'attaque informatique à compromettre la procédure de cybersécurité assurant la défense active du bien informatique, en réalisant au moins un tirage aléatoire avec une probabilité de sélection qui dépend d'une sophistication de l'attaque informatique à compromettre la procédure de cybersécurité assurant la défense active et d'une incertitude sur ladite sophistication ;

        ∘ déterminer une mise en échec (ECH) du bien informatique en comparant le premier score offensif avec le premier score défensif et en comparant le deuxième score offensif avec le deuxième score défensif;
        ∘ déterminer une compromission (COMP) du bien informatique en cas de mise en échec déterminée dudit bien et de chacun du ou des biens informatiques en amont dudit bien dans le chemin de compromission lorsque ledit bien n'est pas le bien informatique d'entrée ;

    • la détermination d'un indicateur de vulnérabilité d'un bien informatique du chemin de compromission sur la base du nombre de simulations pour lesquelles une compromission dudit bien a été déterminée.

**2.**   Procédé selon la revendication 1, dans lequel :

    • l'attaque informatique menée par l'attaquant sur un bien informatique comprend une ou plusieurs procédures d'attaque visant à compromettre la procédure de cybersécurité assurant la défense passive ou la procédure de cybersécurité assurant la défense active;
    • l'au moins un tirage aléatoire avec une probabilité de sélection qui dépend d'une sophistication de l'attaque informatique à compromettre la procédure de cybersécurité assurant la défense passive, respectivement la défense active, et d'une incertitude sur ladite sophistication comprend, pour chacun des biens informatiques du chemin de compromission et pour chacune des procédures d'attaque visant à compromettre la procédure de cybersécurité assurant la défense passive, respectivement la défense active, le tirage aléatoire d'un premier, respectivement deuxième, indicateur d'offensivité avec une probabilité de sélection qui dépend d'une sophistication de la procédure d'attaque et d'une incertitude sur ladite sophistication ; et
    • le premier, respectivement deuxième, score offensif est déterminé à partir des premiers, respectivement deuxièmes, indicateurs d'offensivité tirés pour chacune des procédures d'attaque visant à compromettre la procédure de cybersécurité assurant la défense active, respectivement la défense passive.

**3.**   Procédé selon la revendication 2, dans lequel :

    • la procédure de cybersécurité assurant la défense passive, respectivement la défense active, activée au niveau d'un bien informatique comprend une ou plusieurs mesures de sécurité qui assurent une fonction de cybersécurité du type défense passive, respectivement du type une défense active, contre les procédures d'attaque visant à compromettre la procédure de cybersécurité assurant la défense passive, respectivement la défense active;

• l'au moins un tirage aléatoire avec une probabilité de sélection qui dépend d'une sophistication de la procédure de cybersécurité assurant la défense passive, respectivement la défense active, et d'une incertitude sur ladite sophistication comprend, pour chacun des biens informatiques du chemin de compromission et pour chacune des mesures de sécurité qui assurent une fonction de cybersécurité du type défense passive, respectivement du type défense active, le tirage aléatoire d'un premier, respectivement deuxième, indicateur de défense avec une probabilité de sélection qui dépend d'une sophistication de la mesure de sécurité et d'une incertitude sur ladite sophistication ; et

• le premier, respectivement deuxième, score défensif est déterminé à partir des premiers, respectivement deuxièmes, indicateurs de défense, tirés pour chacune desdites mesures de sécurité qui assurent une fonction de cybersécurité du type défense passive, respectivement du type défense active.

**4.** Procédé selon l'une des revendications 1 à 3, comprenant en outre la détermination pseudo-aléatoire d'une capacité d'une procédure de cybersécurité du type détection activée au niveau du bien informatique à détecter l'attaque informatique, d'une capacité d'une procédure de cybersécurité du type réponse activée au niveau du bien informatique à bloquer l'attaque informatique, d'une capacité de l'attaque informatique à compromettre la procédure de cybersécurité du type détection, et d'une capacité de l'attaque informatique à compromettre la procédure de cybersécurité du type réponse.

**5.** Procédé selon la revendication 4, dans lequel une absence de mise en échec d'un bien informatique est déterminée :

• lorsque le premier score défensif est supérieur au premier score offensif, ou
• dans le cas contraire, à la fois lorsque la capacité de la procédure de cybersécurité du type détection à détecter l'attaque informatique est supérieure à la capacité de l'attaque informatique à compromettre la procédure de cybersécurité du type détection et lorsque la capacité de la procédure de cybersécurité du type réponse à bloquer l'attaque informatique est supérieure à la capacité de l'attaque informatique à compromettre la procédure de cybersécurité du type réponse.

**6.** Procédé selon l'une des revendications 1 à 5, dans lequel chacun du premier et du deuxième score défensif est augmenté d'un bonus basé sur une capacité d'une procédure de cybersécurité du type identification activée au niveau du bien informatique.

**7.** Procédé selon l'une des revendications 1 à 6, comprenant en outre, dans une simulation de propagation de l'attaque informatique sur un chemin de compromission, la constatation que l'attaque est bloquée en cas de non-détermination d'une mise en échec pour au moins un des biens informatiques du chemin de compromission.

**8.** Procédé selon la revendication 7, comprenant en outre la détermination que l'attaque est bloquée par la procédure de cybersécurité assurant la défense passive ou par la procédure de cybersécurité assurant la défense active d'un bien informatique déterminé comme n'étant pas mis en échec.

**9.** Procédé selon la revendication 7, comprenant en outre la détermination d'un niveau de profondeur de l'attaque informatique bloquée sur un chemin de compromission comme étant le bien informatique précédant le premier bien informatique du chemin de compromission pour lequel un échec n'est pas déterminé.

**10.** Procédé selon l'une des revendications 1 à 9, dans lequel chaque simulation comprend en outre une étape consistant, pour chacun des biens du chemin de compromission, à déterminer pseudo-aléatoirement une capacité d'une procédure de cybersécurité du type remédiation activée au niveau du bien informatique à remédier à l'attaque informatique et une étape consistant à calculer un impact de l'attaque au cours de laquelle un impact associé à un bien pour lequel une compromission est déterminée est réduit au moyen de la capacité de la procédure de cybersécurité du type remédiation activée au niveau dudit bien.

**11.** Procédé selon l'une des revendications 1 à 10, comprenant en outre la réitération des étapes de réalisation d'une pluralité de simulations et de détermination d'un indicateur de compromission après modification d'une procédure de cybersécurité au niveau d'un des biens informatiques du chemin de compromission et l'évaluation de l'impact de ladite modification par comparaison des indicateurs de compromission déterminés par la première itération desdites étapes et par ladite réitération desdites étapes.

**12.** Procédé selon l'une des revendications 1 à 10, comprenant en outre la réitération des étapes de réalisation d'une pluralité de simulations et de détermination d'un indicateur de compromission pour un autre chemin de compromission incluant le bien cible.

**13.** Unité de traitement de données configurée pour mettre en œuvre le procédé selon l'une des revendications 1 à 12.

**14.** Produit programme d'ordinateur comprenant des instructions qui, lorsque le programme est exécuté par un ordinateur, conduisent celui-ci à mettre en œuvre le procédé selon l'une des revendications 1 à 12.

**Patentansprüche**

**1.** Verfahren, das von einem Rechner zur Schwachstellenanalyse eines Informationssystems gegenüber einem von einem Angreifer durchgeführten Cyberangriff durchgeführt wird, wobei sich der Cyberangriff über einen oder mehrere Kompromittierungspfade ausbreitet, die jeweils aus einer Abfolge aus mindestens einer IT-Ressource bestehen, einschließlich einer Eingangs-IT-Ressource, wobei das Verfahren für den oder für jeden von den Kompromittierungspfaden umfasst:

     • die Durchführung einer Vielzahl von Simulationen der Ausbreitung des Cyberangriffs auf dem Kompromittierungspfad, wobei jede Simulation für jede der IT-Ressourcen des Kompromittierungspfads die folgenden Schritte umfasst:

         ◦ Bestimmen eines ersten Defensivwerts (SDP), der für eine Fähigkeit eines Cybersicherheitsverfahrens, das eine passive Verteidigung der IT-Ressource gewährleistet, den Cyberangriff zu blockieren, repräsentativ ist, mittels Durchführung mindestens einer Zufallsauswahl mit einer Auswahlwahrscheinlichkeit, die von einer Komplexität des Cybersicherheitsverfahrens, das die passive Verteidigung gewährleistet, und von einer Unsicherheit hinsichtlich dieser Komplexität abhängt;
         ◦ Bestimmen eines ersten Offensivwerts (SOP), der für eine Fähigkeit des Cyberangriffs repräsentativ ist, das Cybersicherheitsverfahren, das die passive Verteidigung der IT-Ressource gewährleistet, zu kompromittieren, mittels Durchführung mindestens einer Zufallsauswahl mit einer Auswahlwahrscheinlichkeit, die von einer Komplexität des Cyberangriffs zur Kompromittierung des Cybersicherheitsverfahrens, das die passive Verteidigung gewährleistet, und von einer Unsicherheit hinsichtlich dieser Komplexität abhängt;
         ◦ Bestimmen eines zweiten Defensivwerts (SDR), der für eine Fähigkeit eines Cybersicherheitsverfahrens, das eine aktive Verteidigung der IT-Ressource gewährleistet, den Cyberangriff zu blockieren, repräsentativ ist, mittels Durchführung mindestens einer Zufallsauswahl mit einer Auswahlwahrscheinlichkeit, die von einer Komplexität des Cybersicherheitsverfahrens, das die aktive Verteidigung gewährleistet, und von einer Unsicherheit hinsichtlich dieser Komplexität abhängt;
         ◦ Bestimmen eines zweiten Offensivwerts (SOR), der für eine Fähigkeit des Cyberangriffs repräsentativ ist, das Cybersicherheitsverfahren, das die aktive Verteidigung der IT-Ressource gewährleistet, zu kompromittieren, mittels Durchführung mindestens einer Zufallsauswahl mit einer Auswahlwahrscheinlichkeit, die von einer Komplexität des Cyberangriffs zur Kompromittierung des Cybersicherheitsverfahrens, das die aktive Verteidigung gewährleistet, und von einer Unsicherheit hinsichtlich dieser Komplexität abhängt;
         ◦ Bestimmen eines Ausfalls (ECH) der IT-Ressource durch Vergleichen des ersten Offensivwerts mit dem ersten Defensivwert und durch Vergleichen des zweiten Offensivwerts mit dem zweiten Defensivwert;
         ◦ Bestimmen einer Kompromittierung (COMP) der IT-Ressource im Falle eines festgestellten Ausfalls der Ressource und der oder jeder von den IT-Ressourcen, die der Ressource des Kompromittierungspfads vorgelagert ist/sind, wenn die Ressource nicht die Eingangs-IT-Ressource ist;

     • die Bestimmung eines Schwachstellenindikators für eine IT-Ressource des Kompromittierungspfads auf der Basis der Anzahl der Simulationen, für die eine Kompromittierung der Ressource festgestellt wurde.

**2.** Verfahren nach Anspruch 1, wobei:

     • der vom Angreifer auf eine IT-Ressource durchgeführte Cyberangriff ein oder mehrere Angriffsverfahren umfasst, die darauf abzielen, das Cybersicherheitsverfahren, das die passive Verteidigung gewährleistet, oder das Cybersicherheitsverfahren, das die aktive Verteidigung gewährleistet, zu kompromittieren;
     • die mindestens eine Zufallsauswahl mit einer Auswahlwahrscheinlichkeit, die von einer Komplexität des Cyberangriffs abhängt, das Cybersicherheitsverfahren, das die passive Verteidigung beziehungsweise die aktive Verteidigung gewährleistet, zu kompromittieren, und von einer Unsicherheit hinsichtlich dieser Komplexität für jede der IT-Ressourcen des Kompromittierungspfads und für jedes der Angriffsverfahren, die darauf abzielen, das Cybersicherheitsverfahren, das die passive Verteidigung beziehungsweise die aktive Verteidigung gewährleistet, zu kompromittieren, die Zufallsauswahl eines ersten beziehungsweise zweiten Offensivitätsindikators mit einer Auswahlwahrscheinlichkeit umfasst, die von einer Komplexität des Angriffsverfahrens und von einer Unsicherheit hinsichtlich dieser Komplexität abhängt; und
• der erste beziehungsweise zweite Offensivwert aus den ersten beziehungsweise zweiten Offensivitätsindikatoren bestimmt wird, die für jedes der Angriffsverfahren ermittelt wurden, die darauf abzielen, das Cybersicherheitsverfahren zu kompromittieren, das die aktive beziehungsweise passive Verteidigung gewährleistet.

3. Verfahren nach Anspruch 2, wobei:

• das Cybersicherheitsverfahren, das die passive Verteidigung beziehungsweise die aktive Verteidigung gewährleistet, das im Bereich einer IT-Ressource aktiviert ist, eine oder mehrere Sicherheitsmaßnahmen umfasst, die eine Cybersicherheitsfunktion vom Typ passive Verteidigung beziehungsweise vom Typ aktive Verteidigung gegen Angriffsverfahren gewährleisten, die darauf abzielen, das Cybersicherheitsverfahren, das die passive Verteidigung beziehungsweise die aktive Verteidigung gewährleistet, zu kompromittieren;
• die mindestens eine Zufallsauswahl mit einer Auswahlwahrscheinlichkeit, die von einer Komplexität des Cybersicherheitsverfahrens, das die passive Verteidigung beziehungsweise die aktive Verteidigung gewährleistet, und von einer Unsicherheit hinsichtlich dieser Komplexität abhängt, für jede der IT-Ressourcen des Kompromittierungspfads und für jede der Sicherheitsmaßnahmen, die eine Cybersicherheitsfunktion vom Typ passive Verteidigung beziehungsweise vom Typ aktive Verteidigung gewährleisten, die Zufallsauswahl eines ersten beziehungsweise zweiten Verteidigungsindikators mit einer Auswahlwahrscheinlichkeit umfasst, die von der Komplexität der Sicherheitsmaßnahme und einer Unsicherheit hinsichtlich dieser Komplexität abhängt; und
• der erste beziehungsweise zweite Defensivwert aus den ersten beziehungsweise zweiten Verteidigungsindikatoren bestimmt wird, die für jede der Sicherheitsmaßnahmen bestimmt wurden, die eine Cybersicherheitsfunktion vom Typ passive Verteidigung beziehungsweise vom Typ aktive Verteidigung gewährleisten.

4. Verfahren nach einem der Ansprüche 1 bis 3, das ferner die pseudozufällige Bestimmung einer Fähigkeit eines Cybersicherheitsverfahrens vom Typ aktivierte Erkennung im Bereich der IT-Ressource, den Cyberangriff zu erkennen, einer Fähigkeit eines Cybersicherheitsverfahrens vom Typ aktivierte Reaktion im Bereich der IT-Ressource, den Cyberangriff zu blockieren, einer Fähigkeit des Cyberangriffs, das Cybersicherheitsverfahren vom Typ Erkennung zu kompromittieren, und einer Fähigkeit des Cyberangriffs, das Cybersicherheitsverfahren vom Typ Reaktion zu kompromittieren, umfasst.

5. Verfahren nach Anspruch 4, wobei ein Nicht-Ausfall einer IT-Ressource bestimmt wird:

• wenn der erste Defensivwert größer ist als der erste Offensivwert, oder
• andernfalls, sowohl wenn die Fähigkeit des Cybersicherheitsverfahrens vom Typ Erkennung, den Cyberangriff zu erkennen, größer ist als die Fähigkeit des Cyberangriffs, das Cybersicherheitsverfahren vom Typ Erkennung zu kompromittieren, als auch wenn die Fähigkeit des Cybersicherheitsverfahrens vom Typ Reaktion, den Cyberangriff zu blockieren, größer ist als die Fähigkeit des Cyberangriffs, das Cybersicherheitsverfahren vom Typ Reaktion zu kompromittieren.

6. Verfahren nach einem der Ansprüche 1 bis 5, wobei sowohl der erste als auch der zweite Defensivwert um einen Bonus erhöht wird, der auf einer Fähigkeit eines im Bereich der IT-Ressource aktivierten Cybersicherheitsverfahrens vom Typ Identifizierung basiert.

7. Verfahren nach einem der Ansprüche 1 bis 6, das ferner in einer Ausbreitungssimulation des Cyberangriffs auf einem Kompromittierungspfad die Feststellung umfasst, dass der Angriff bei einer Nicht-Feststellung eines Ausfalls für mindestens eine der IT-Ressourcen des Kompromittierungspfads blockiert wird.

8. Verfahren nach Anspruch 7, das ferner die Feststellung umfasst, dass der Angriff durch das Cybersicherheitsverfahren blockiert wird, das die passive Verteidigung gewährleistet, oder durch das Cybersicherheitsverfahren, das die aktive Verteidigung einer IT-Ressource gewährleistet, die als nicht ausgefallen bestimmt wurde.

**9.** Verfahren nach Anspruch 7, das ferner die Feststellung eines Tiefenniveaus des auf einem Kompromittierungspfad blockierten Cyberangriffs als die IT-Ressource umfasst, die der ersten IT-Ressource des Kompromittierungspfads vorausgeht, für die kein Ausfall festgestellt wurde.

**10.** Verfahren nach einem der Ansprüche 1 bis 9, wobei jede Simulation ferner einen Schritt umfasst, der für jede der Ressourcen des Kompromittierungspfads darin besteht, pseudozufällig eine Fähigkeit eines im Bereich der IT-Ressource aktivierten Cybersicherheitsverfahrens vom Typ Abwehr zu bestimmen, den Cyberangriff abzuwehren, sowie einen Schritt, der darin besteht, eine Auswirkung des Angriffs zu berechnen, bei dem eine Auswirkung, die einer Ressource zugeordnet ist, für die eine Kompromittierung festgestellt wurde, mittels der Fähigkeit des im Bereich der Ressource aktivierten Cybersicherheitsverfahrens vom Typ Abwehr reduziert wird.

**11.** Verfahren nach einem der Ansprüche 1 bis 10, das ferner die Wiederholung der Schritte der Durchführung einer Vielzahl von Simulationen und der Bestimmung eines Kompromittierungsindikators nach Änderung eines Cybersicherheitsverfahrens im Bereich einer der IT-Ressourcen des Kompromittierungspfads und der Bewertung der Auswirkungen dieser Änderung durch Vergleich der Kompromittierungsindikatoren umfasst, die durch die erste Wiederholung der Schritte und durch die Wiederholung der Schritte bestimmt wurden.

**12.** Verfahren nach einem der Ansprüche 1 bis 10, das ferner die Wiederholung der Schritte der Durchführung einer Vielzahl von Simulationen und der Bestimmung eines Kompromittierungsindikators für einen anderen Kompromittierungspfad umfasst, der die Zielressource einschließt.

**13.** Datenverarbeitungseinheit, die zur Durchführung des Verfahrens nach einem der Ansprüche 1 bis 12 ausgelegt ist.

**14.** Rechnerprogrammprodukt, das Anweisungen umfasst, die, wenn das Programm von einem Rechner ausgeführt wird, diesen veranlassen, das Verfahren nach einem der Ansprüche 1 bis 12 auszuführen.

**Claims**

**1.** A computer-implemented method for analyzing the vulnerability of an information system to a cyber attack led by a hacker, the cyber attack propagating over one or more compromise paths each consisting of a succession of at least one computer asset including a starting computer asset, the method for each of the compromise path(s) comprising:

- carrying out a plurality of simulations of propagation of the cyber attack on the compromise path, wherein each simulation for each of the computer assets on the compromise path comprises the steps of:

  ○ determining a first defensive score (SDP) representing a capability of a cyber security procedure providing passive defence of the computer asset to block the cyber attack, by performing at least one random sampling with a selection probability dependent upon a sophistication of the cyber security procedure providing passive defence and upon an uncertainty on said sophistication;
  ○ determining a first offensive score (SOP) representing a capability of the cyber attack to compromise the cyber security procedure providing passive defence of the computer asset, by performing at least one random sampling with a selection probability dependent upon a sophistication of the cyber attack to compromise the cyber security procedure providing passive defence and upon an uncertainty on said sophistication;
  ○ determining a second defensive score (SDR) representing a capability of a cyber security procedure providing active defence of the computer asset to block the cyber attack, by performing at least one random sampling with a selection probability dependent upon a sophistication of the cyber security procedure proving active defence and upon an uncertainty on said sophistication;
  o○ determining a second offensive score (SOR) representing a capability of the cyber attack to compromise the cyber security procedure providing active defence of the computer asset, by performing at least one random sampling with a selection probability dependent upon a sophistication of the cyber attack to compromise the cyber security procedure providing active defence and upon an uncertainty on said sophistication;
  ○ determining a downfall (ECH) of the computer asset by comparing the first offensive score with the first defensive score, and by comparing the second offensive score with the second defensive score;
  ○ determining compromise (COMP) of the computer asset in the event of determined downfall of said asset and of each of the computer asset(s) upstream of said asset on the compromise path when said asset is not the starting computer asset;

- determining a vulnerability indicator of a computer asset on the compromise path, on the basis of the number of simulations in which compromise of said asset has been determined.

2. The method according to claim 1, wherein:

- the cyber attack led by the hacker on a computer asset comprises one or more attack procedures intended to compromise the cyber security procedure providing passive defence, or the cyber security procedure providing active defence;
- the at least one random sampling with a selection probability dependent upon a sophistication of the cyber attack to compromise the cyber security procedure providing passive defence, respectively active defence, and upon an uncertainty on said sophistication comprises, for each of the computer assets on the compromise path and for each of the attack procedures intended to compromise the cyber security procedure providing passive defence, respectively active defence, the random sampling of a first, respectively second, indicator of offensiveness with a selection probability dependent upon a sophistication of the cyber attack and upon an uncertainty on said sophistication; and
- the first, respectively second, offensive score is determined from the first, respectively second, indicators of offensiveness sampled for each of the attack procedures intended to compromise the cyber security procedure providing active defence, respectively passive defence.

3. The method according to claim 2, wherein:

- the cyber security procedure providing passive defence, respectively active defence, activated at a computer asset comprises one or more security measures ensuring a cyber security function of passive defence type, respectively active defence type, against attack procedures intended to compromise the cyber security procedure providing passive defence, respectively active defence;
- the at least one random sampling with a selection probability dependent upon a sophistication of the cyber security procedure providing passive defence, respectively active defence, and upon an uncertainty on said sophistication comprises, for each of the computer assets on the compromise path and for each of the security measures ensuring a cyber security function of passive defence type, respectively active defence type, the random sampling of a first, respectively second, defence indicator with a selection probability dependent upon a sophistication of the security measure and upon an uncertainty on said sophistication; and
- the first, respectively second, defensive score is determined from the first, respectively second, defence indicators sampled for each of said security measures ensuring a cyber security function of passive defence type, respectively active defence type.

4. The method according to one of claims 1 to 3, further comprising the pseudo-random determination of a capability of a cyber security procedure of detection type activated at the computer asset to detect the cyber attack, of a capability of a cyber security procedure of response type activated at the computer asset to block the cyber attack, of a capability of the cyber attack to compromise the cyber security procedure of detection type, and of a capability of the cyber attack to compromise the cyber security procedure of response type.

5. The method according to claim 4 wherein the non-downfall of a computer asset is determined:

- when the first defensive score is higher than the first offensive score, or
- if not, both when the capability of the cyber security procedure of detection type to detect the cyber attack is greater than the capability of the cyber attack to compromise the cyber security procedure of detection type and when the capability of the cyber security procedure of response type to block the cyber attack is greater than the capability of the cyber attack to compromise the cyber security procedure of response type.

6. The method according to one of claims 1 to 5, wherein each of the first and second defensive score is increased by a bonus based on a capability of a cyber security procedure of identification type activated at the computer asset.

7. The method according to one of claims 1 to 6, further comprising, in a simulation of propagation of the cyber attack on a compromise path, the ascertaining that the attack is blocked in the event of non-determination of downfall for at least one of the computer assets on the compromise path.

8. The method according to claim 7, further comprising the determination that the attack is blocked by the cyber security procedure providing passive defence or by the cyber security procedure providing active defence of a computer asset determined as not being in downfall.

9. The method according to claim 7, further comprising determination of a depth level of the cyber attack blocked on a compromise path, determined as being the computer asset preceding the first computer asset on the compromise path for which downfall is not determined.

10. The method according to one of claims 1 to 9, wherein each simulation further comprises a step, for each of the assets on the compromise path, to determine pseudo-randomly a capability of a cyber security procedure of remediation type activated at the computer asset to remedy the cyber attack, and a step to calculate an impact of the attack in which an impact associated with an asset determined as being compromised is reduced by means of the capability of the cyber security procedure of remediation type activated at said asset.

11. The method according to one of claims 1 to 10, further comprising reiteration of the steps to carry out a plurality of simulations and to determine an indicator of compromise after modifying a cyber security procedure at one of the computer assets on the compromise path, and to evaluate the impact of said modification by comparison of the indicators of compromise determined by the first iteration of said steps and by said reiteration of said steps.

12. The method according to one of claims 1 to 10, further comprising reiteration of the steps to carry out a plurality of simulations and to determine an indicator of compromise for another compromise path including the target asset.

13. A data processing unit configured to implement the method according to one of claims 1 to 12.

14. A computer programme product comprising instructions which, when executed by a computer, lead to implementation by the latter of the method according to one of claims 1 to 12.

**Fig. 1**

EP 4 409 450 B1

| Bien d'entrée:<br>Site Internet | → | Serveur | → | Réseau<br>bureautique | → | Bien cible:<br>Terminaux utilisateurs |
|---|---|---|---|---|---|---|

| Mise en échec :<br>OUI | | Mise en échec :<br>OUI | | Mise en échec :<br>NON | | Mise en échec :<br>OUI |
|---|---|---|---|---|---|---|

Simulation n

| Compromission:<br>OUI | | Compromission:<br>OUI | | Compromission :<br>NON | | Compromission :<br>NON |
|---|---|---|---|---|---|---|

**Fig. 2**

**Fig. 3**

**EP 4 409 450 B1**

**RÉFÉRENCES CITÉES DANS LA DESCRIPTION**

**Documents brevets cités dans la description**

- US 7926113 B1